# EUROPEAN PATENT APPLICATION

(11) **EP 3 543 848 A1**
(43) Date of publication of application: **25.09.2019**
(21) Application number: 19174304.6
(22) Date of filing: 21.02.2013
(51) Int. Cl.: G06F 9/451, G06F 3/0481, G06F 3/0484

(54) **METHOD AND DEVICE FOR GENERATING CAPTURED IMAGE FROM DISPLAY WINDOWS**

(30) Priority: 24.02.2012 KR 20120019180; 31.07.2012 KR 20120084193
(62) Divisional of application: 13156174.8
(71) Applicant: Samsung Electronics Co., Ltd., Gyeonggi-do 16677 (KR)
(72) Inventor: KIM, Eun-young, Gyeonggi-do (KR); KIM, Kang-tae, Gyeonggi-do (KR); KIM, Chul-joo, Gyeonggi-do (KR); SUN, Kwang-won, Gyeonggi-do (KR); LEE, Jae-yeol, Gyeonggi-do (KR)
(74) Representative: HGF Limited

(57) **Abstract**

A method and device for generating a captured image from display windows displayed on a screen are provided. The method includes determining at least one first display window to be captured from among one or more display windows displayed on a screen, capturing data displayed within the first display window based on a user input to generate a captured image, and displaying the captured image such that it overlaps the first display window.

## Description

### BACKGROUND OF THE INVENTION

### Field of the Invention:

The present invention relates to a method and device for generating a captured image from a display window displayed on a screen. More particularly, certain embodiments of the present invention relates to a method and device for generating a captured image from a display window based on a received user input and for moving the captured image between display windows.

### Description of the Related Art:

In terminal devices that perform a plurality of applications simultaneously, interaction between the plurality of applications is possible through a multi-window framework. In addition, the same application may be simultaneously executed on a plurality of windows in a multi-window framework.

In a terminal device environment according to the related art, although a plurality of applications may be simultaneously executed, each of the plurality of applications is executed on the entire screen. Thus, it is not easy to simultaneously execute and to manipulate the plurality of applications.

Therefore, a need exists for a system and method for enabling interaction between a plurality of applications by moving data between the plurality of applications to be simultaneously executed through a multi-window framework.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to address at least some of the above-mentioned problems and/or disadvantages and to provide at least some of the advantages described below. Accordingly, an aim of certain embodiments of the present invention is to provide a method and device that enable interaction between a plurality of applications simultaneously executed through a multi-window framework by moving data between the plurality of applications .

In accordance with a first aspect of the present invention, a method of generating a captured image from display windows displayed on a screen is provided. The method includes determining at least one first display window to be captured from among one or more display windows displayed on the screen, capturing data displayed within the first display window based on a user input to generate a captured image, and displaying the captured image such that it overlaps the first display window.

In an exemplary implementation, when there are a plurality of first display windows displaying the captured image may include displaying the captured image such it overlaps each of the plurality of first display windows.

In an exemplary implementation, when the first display window is an entire screen mode display window displaying the captured image may include, displaying the captured image in a partial area of the first display window.

In an exemplary implementation, the method of generating a captured image for display windows displayed on a screen may further include inserting at least a part of the captured image in a second display window.

In an exemplary implementation, inserting at least a part of the captured image may include inserting at least a part of the captured image in the second display window based on a user input corresponding to touching the captured image for a predetermined amount of time and dragging the touch point toward the second display window.

In an exemplary implementation, the method of generating a captured image from display windows displayed on a screen may further include determining a predetermined area of the displayed captured image, and selecting an image in the determined area of the captured image as a cut image, wherein inserting at least a part of the captured image in the second display window may include inserting the cut image in the second display window.

In an exemplary implementation, determining a predetermined area may include displaying an area selected by a user on the displayed captured image, and correcting the displayed area.

In an exemplary implementation, correcting the displayed area may include moving the displayed area to other regions of the captured image in response to a user touching the displayed area and dragging the touch point within a predetermined amount of time from the point in time at which the displayed area is touched.

In an exemplary implementation, correcting the displayed area may include varying a size of the displayed area in response to a user touching the displayed area at two touch points and moving the touch points apart or together.

In an exemplary implementation, the area selected by the user may be selected based on a user touch input corresponding to drawing a closed curve on the captured image.

In an exemplary implementation, determining the predetermined area may include determining the predetermined area as an image to be cut as the user's touch on the predetermined area is maintained for a predetermined amount of time.

In an exemplary implementation, the cut image may be displayed with a smaller size than an image of the determined area.

In an exemplary implementation, determining the first display window may include determining an activated window from among the plurality of display windows as a first display window when a predetermined button on the screen is touched.

In an exemplary implementation, determining the first display window may include determining a window other than the activated window from among the plurality of display windows as a first display window when a predetermined button on the screen is touched.

In an exemplary implementation, inserting at least part of the captured image in the second display window may include, if an application corresponding to the second display window provides a function of inserting an image in a screen displayed on the second display window, inserting the captured image in the second display window.

In an exemplary implementation, the captured image may have the same size as the first display window and may be displayed at the same relative position as the first display window.

Displaying the captured image may comprise displaying the captured image according to a size of the first display window.

Capturing data may comprise capturing all regions of the first display window.

In accordance with another aspect of the present invention, a device for generating a captured image for display windows displayed on a display unit is provided. The device includes a user input receiving unit for receiving a user input from the device, a capturing unit for determining a first display window to be captured from among a plurality of display windows displayed on the screen and for capturing data displayed on the first display window based on the user input, and a display unit for overlapping a captured image, which is generated by the capturing of the data displayed on the first display window, with the first display window to a size of the first display window, and for displaying the captured image on the first display window.

Another aspect of the invention provides a computer program comprising instructions arranged, when executed, to implement a method in accordance with any one of the above-described aspects. A further aspect provides a non-transitory computer-readable recording medium for storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:
FIG. 1 illustrates a plurality of display windows that overlap one another and that are displayed on a screen according to an exemplary embodiment of the present invention;
FIG. 2 is a block diagram of a structure of a device for generating a captured image for display windows according to an exemplary embodiment of the present invention;
FIG. 3 is a flowchart illustrating a method of generating a captured image according to an exemplary embodiment of the present invention;
FIG. 4 is a flowchart illustrating a method of moving a captured image generated by, for example, the method illustrated in FIG. 3 according to an exemplary embodiment of the present invention;
FIG. 5 is a flowchart illustrating a method of moving a captured image generated by, for example, the method illustrated in FIG. 3 according to another exemplary embodiment of the present invention;
FIGs. 6A and 6B illustrate an operation of overlapping and displaying a captured image according to an exemplary embodiment of the present invention;
FIGs. 7A and 7B illustrate an operation of overlapping and displaying a captured image according to another exemplary embodiment of the present invention;
FIGs. 8A and 8B illustrate an operation of overlapping and displaying a captured image according to yet another exemplary embodiment of the present invention;
FIGs. 9A through 9C illustrate an operation of determining an area to be captured according to an exemplary embodiment of the present invention;
FIG. 10 illustrates an operation of moving a captured image according to an exemplary embodiment of the present invention;
FIGs. 11A and 11B illustrate an operation of correcting an insertion area of the capture image according to an exemplary embodiment of the present invention;
FIGs. 12A and 12B illustrate an operation of moving a captured image to a second display window according to an exemplary embodiment of the present invention;
FIGs. 13A and 13B illustrate an operation of moving a captured image to the second display window according to another exemplary embodiment of the present invention;
FIG. 14 illustrates an editing tool for correcting an inserted captured image according to an exemplary embodiment of the present invention;
FIG. 15 illustrates an operation of moving data displayed on a first display window to a second display window according to another exemplary embodiment of the present invention;
FIG. 16 illustrates an operation of moving data displayed on a first display window to a second display window according to another exemplary embodiment of the present invention;
FIG. 17 illustrates an operation of moving data displayed on a first display window to a second display window according to another exemplary embodiment of the present invention; and
FIG. 18 illustrates an operation of moving data displayed on a first display window to a second display window according to another exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions may be omitted for clarity and conciseness.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

In the specification, "capturing" data displayed on a screen includes a case of obtaining a displayed "image or text" and a case of obtaining "information relating to displayed image or text". For example, when a displayed image or text is captured, Uniform Resource Identifier (URI) information, intent information, and the like, which are related with the displayed image or text, may be obtained together with the displayed image or text.

Exemplary embodiments of the present invention will be described below in more detail with reference to the accompanying drawings, in which exemplary embodiments of the present invention are shown.

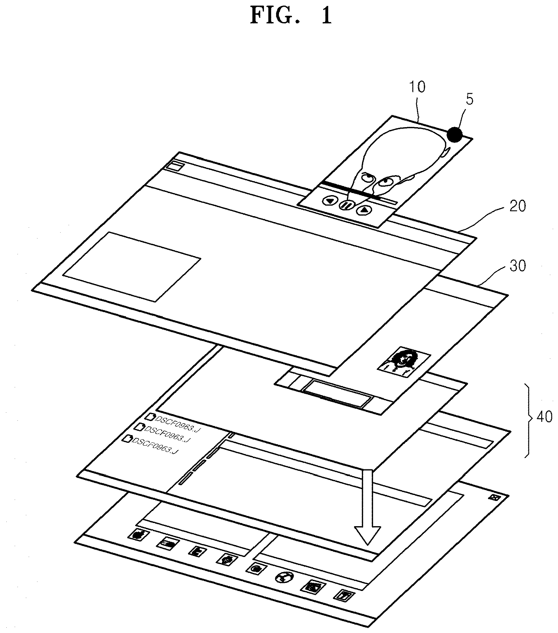

FIG. 1 illustrates a plurality of display windows that overlap one another and that are displayed on a screen according to an exemplary embodiment of the present invention.

Referring to FIG. 1, a plurality of display windows 10, 20, 30, and 40 may overlap one another and may be displayed on a screen. A pin-up display window 10 is set to be displayed on a top of the screen, and when the pin-up display window 10 is displayed together with another display window, the pin-up display window 10 may be always displayed on the top of the screen. In addition, an additional icon 5 may be displayed in a predetermined area of the pin-up display window 10. For example, a pin-shaped icon may be displayed on the pin-up display window 10 as being inserted in the pin-up display window 10.

The entire screen mode display window 20 is set to be displayed on the entire screen and may be displayed to have the same size as the screen.

A partial screen mode display window 30 is set to be displayed on a part of the screen and may be suitable for an application that supports a window having a smaller size than the screen. In addition, the partial screen mode display window 30 may be suitable for applications that may display windows which overlap other windows, such as applications for providing functions such as chatting, memo taking, and the like.

In addition, a free size mode display window 40 may be a window that may be displayed on a part of the screen and has a size that may be adjusted by a user input. In addition, the display windows 10, 20, 30, and 40 may be displayed on the screen such that they overlap, and a predetermined window among the display windows 10, 20, 30, and 40 may be displayed according to types of applications.

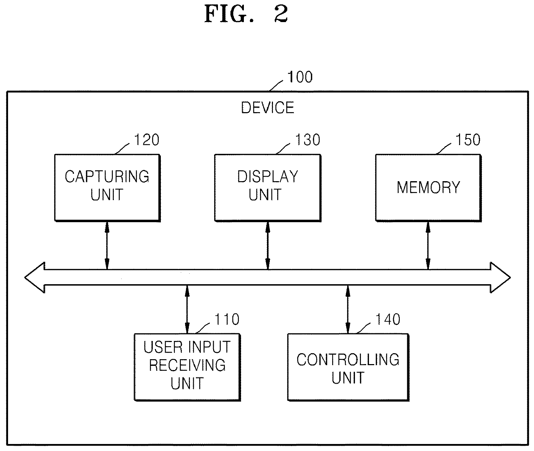

FIG. 2 is a block diagram of a structure of a device for generating a captured image from display windows according to an exemplary embodiment of the present invention.

Referring to FIG. 2, the device 100 according to the present exemplary embodiment includes a user input receiving unit 110, a capturing unit 120, a display unit 130, a controlling unit 140, and a memory 150.

An operation of moving a captured image between a plurality of display windows by using the device 100 is described below.

The user input receiving unit 110 receives a user input from the device 100. For example, a user may touch a screen of the device 100 at a predetermined position, and the user input receiving unit 110 may receive a user input by the user's touch. The user input receiving unit 110 may also receive a user input by using an input tool, such as a keyboard, a mouse, a stylus, or the like.

The user input receiving unit 110 may receive an input for capturing data to be displayed on a display window of the device 100. According to an exemplary embodiment of the present invention, the user input receiving unit 110 may receive an input for capturing data (e.g., an input for selecting a predetermined button displayed on a display window).

The user input receiving unit 110 may also receive an input for selecting a part of a captured image. For example, the user input receiving unit 110 may receive an input for touching and dragging the part of the captured image as an input for selecting a partial area of the captured image so as to draw, for example, a closed curve on the captured image. As described above, although the user input receiving unit 110 receives a user input for capturing the screen of the display window and for selecting a part of the captured image, aspects of exemplary embodiments of the present invention are not limited thereto. The user input receiving unit 110 may also receive a user input for immediately capturing a partial area of the screen of the display window. For example, the user input receiving unit 110 may receive an input for touching a predetermined point of the captured image, and an area in a predetermined range may be captured from the touched point.

In addition, according to exemplary embodiments of the present invention, the user input receiving unit 110 may receive an input for selecting a text. The input for selecting a text may be an input for dragging a partial text. However, an input for selecting data received by the user input receiving unit 110 is not limited thereto. For example, like receiving an input for selecting a predetermined area by selecting two or more positions of the screen, the user input receiving unit 110 may receive various types of user inputs.

In addition, according to exemplary embodiments of the present invention, the user input receiving unit 110 may receive an input for moving captured data. The user input receiving unit 110 may receive a user input by performing several types of operations, such as touch, drag and drop, long tapping or holding, and the like, when receiving an input for selecting and moving the captured data. In addition, the user input receiving unit 110 may receive an input for moving the selected part of data together with an input for selecting a part of the captured data. The data may include an image, a text, and a moving picture image, for example, but aspects of exemplary embodiments of the present invention are not limited thereto.

In addition, according to exemplary embodiments of the present invention, the user input receiving unit 110 may receive a user input for terminating capturing of the data. When the captured data is not required to be further moved to a second display window, the user input receiving unit 110 may receive a user input for terminating capturing of the data from the user.

The capturing unit 120 captures data displayed on a first display window. The data displayed on the first display window may be various types of data, such as a still image, a moving picture image, a text, and the like. However, the data captured by the capturing unit 120 is not limited to such an image or text and may be all types of data displayed on the display window.

The capturing unit 120 may capture the data displayed on the first display window based on the user input received by the user input receiving unit 110. As described above, when the user input receiving unit 110 receives an input for selecting a predetermined button displayed on the first display window, the capturing unit 120 may capture the displayed data.

In detail, the capturing unit 120 may determine the first display window that is to be displayed from among a plurality of display windows displayed on the screen of the device 100. The capturing unit 120 may determine an activated window from among the plurality of display windows displayed on the screen of the device 100 as the first display window as a predetermined button of the screen of the device 100 is touched.

In addition, the capturing unit 120 may determine a window excluding the activated window from among the plurality of display windows displayed on the screen of the device 100 as the first display window as the predetermined button of the screen of the device is touched. In addition, when three or more display windows are displayed on the screen of the device 100, each of two or more display windows may be determined as the first display window.

In addition, the capturing unit 120 may capture data displayed on the first display window and may determine a part or all of a captured image as an image to be cut. The capturing unit 120 may determine a predetermined area of the captured image based on the user input and may cut the determined image. For example, the capturing unit 120 may determine an area included in the closed curve as an image to be cut, based on the user input for drawing the closed curve on the captured image. In addition, the capturing unit 120 may determine an area in a predetermined range from a predetermined point that is touched by the user as an image to be cut.

In addition, the predetermined area of the captured image may be selected and corrected by the user, and the capturing unit 120 may determine the corrected area of the captured image as an image to be cut. For example, the user touches the area selected by the user and drags the touch within a predetermined time from the touch point of time so that the touched area may be moved to another area of the captured image.

In addition, the capturing unit 120 may cut the moved area of the captured image. In addition, as the area selected by the user is manipulated by moving two touch points together or apart, the size of the selected area may vary, and the capturing unit 120 may cut the area of the captured image with the varying size. In addition, if a touch input in the area selected and corrected by the user is maintained for a predetermined amount of time, the capturing unit 120 may determine the selected and corrected area as an image to be cut.

The capturing unit 120 may capture data displayed on the first display window as an image, text, and/or the like. In addition, the capturing unit 120 may select a partial area of the captured data. As described above, when the user input receiving unit 110 receives an input for selecting a partial area of the captured image of the screen, the capturing unit 120 may select the partial area of the captured image based on the received user input.

In addition, when the user input receiving unit 110 receives an input for selecting a partial text, the capturing unit 120 may select a part of a captured text based on the received user input. The text captured by the capturing unit 120 may include character data, URI data, intent data, and the like among the displayed data.

In addition, when data displayed on the first display window is a moving picture image, the capturing unit 120 may capture the URI data or intent data of the displayed moving picture image based on the user input. For example, the capturing unit 120 may capture an Internet address of the moving picture image displayed on the first display window and/or information regarding the moving picture image. As an example, information regarding the moving picture image which may be captured by the capturing unit 120 may include a title, a description, characters of the moving picture image, and the like. The title of the moving picture image in the form of a text may be inserted in the second display window, and the Internet address of the captured moving picture image in the form of a link may be inserted in the second display window.

The display unit 130 inserts the data that is captured by the capturing unit 120 in the second display window and displays the data. The captured data may be a captured image. The display unit 130 may insert the data that is captured by the capturing unit 120 in the second display window, based on the user input received by the user input receiving unit 110, and may display the data.

For example, when the user input receiving unit 110 receives an input for selecting the captured data by touching a predetermined area of the first display window and for moving the data selected by drag and drop to the second display window, the display unit 130 may insert the captured data in the second display window and may display the data. In addition, when the user input receiving unit 110 receives an input for moving a part of the captured data, the display unit 130 may insert a partial area or text of the captured data in the second display window and may display the partial area or text of the captured data.

In detail, the display unit 130 may overlap the captured image generated by the capturing unit 120 with the first display window and may display the overlapping captured image, may insert a part or all of the displayed captured image in the second display window and may display the part or all of the captured image. In this case, the captured image may have the same size as the first display window and may be displayed to overlap at the same position with the first display window. However, aspects of the exemplary embodiment of the present invention are not limited thereto.

In addition, the display unit 130 may insert a part of the captured image that is determined by the capturing unit 120 in the second display window and may display the part of the captured image. In detail, the display unit 130 may display an area selected by the user on the captured image based on the user input relating to the captured image. In addition, as the user moves the displayed area or varies the size of the displayed area, the display unit 130 may display the displayed area by moving or varying the displayed area.

In addition, as a partial area of the captured image is selected and the selected area is touched for a predetermined amount of time, the capturing unit 120 may cut the touched area of the captured image, and the display unit 130 may reduce the cut image smaller than the touched area of the captured image and may overlap the reduced image with the touched area so as to display the image. In addition, if touch on the cut image is dragged toward the second display window, the display unit 130 may move the cut image to the second display window.

In addition, the display unit 130 may insert all or a part of the captured image in the second display window if an application corresponding to the second display window provides a function of inserting an image in the screen displayed on the second display window.

In addition, the display unit 130 may insert a part or all of the captured image in the second display window based on a user input for touching the captured image for a predetermined amount of time and for dragging the touch toward the second display window and may display the image.

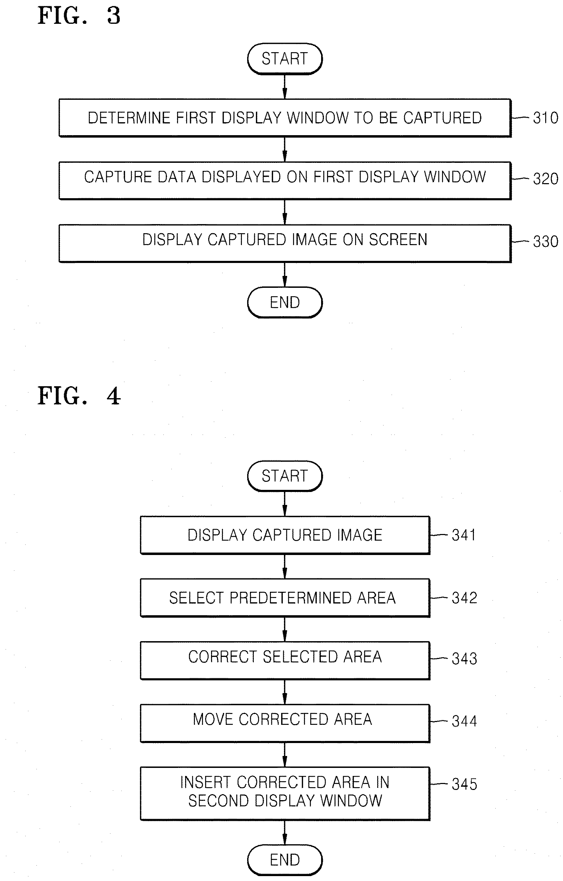

In another exemplary embodiment of the present invention, the display unit 130 may insert data at a position at which the drop operation on the second display window is completed and may display the data when the user input receiving unit 110 receives an input to execute a drag and drop operation. This will be described in detail with reference to FIG. 4. In addition, when the position at which the drop operation is completed corresponds to a predetermined field included in the second display window, the display unit 130 may insert the captured data in a field at the position at which the drop operation is completed and may display the data in the field.

In addition, the display unit 130 may adjust the screen size of the data to be inserted on the second display window based on the size of an area in which the captured data such as, for example, an image, text, and/or the like, is displayed. For example, if the screen size of the second display window is smaller than the screen size of the captured data, the display unit 130 may reduce the screen size of the captured image so as to insert the image in the second display window. Alternatively, regardless of the screen size of the second display window, when the screen size of an area in which data is to be inserted and to be displayed is small such as, for example, an area corresponding to each date of a display window on which a calendar is displayed, the display unit 130 may reduce the screen size of data to be inserted and to be displayed according to the size of the area.

In addition, according to exemplary embodiments of the present invention, the display unit 130 may insert a captured image or text in the second display window so as to display the captured image or text. In addition, the display unit 130 may insert link information corresponding to the captured data in the second display window together with the captured data such as, for example, an image or a text.

In addition, according to exemplary embodiments of the present invention, the display unit 130 may divide the captured data into a first area and a second area (a captured area and an un-captured area). For example, the display unit 130 may divide the displayed data into a captured area and an un-captured area before the user input receiving unit 110 receives the user input for terminating capturing before the data is captured. For example, the display unit 130 may display the un-captured area of the data displayed on the first display window darker than the captured area thereof or may vary at least one of colour, saturation, and brightness of the un-captured area.

In addition, when data captured by the capturing unit 120 is information regarding a moving picture image, the display unit 130 may insert the captured information regarding the moving picture image 20 in the second display window. For example, when a memo pad application is executed on the second display window, the display unit 130 may insert the title of the moving picture image in the form of text so as to display the captured information. In addition, the display unit 130 may insert an Internet address of the moving picture image in the form of a link so as to display the captured information. In addition, when a web browser application is executed on the second display window, the display unit 130 may insert and display the captured information regarding the moving picture image by immediately connecting the Internet address to the web browser application of the second display window so that the captured moving picture image may be executed on the second display window.

According to exemplary embodiments of the present invention, the controlling unit 140 controls the entire operation of the device 100 and controls the user input receiving unit 110, the capturing unit 120, the display unit 130, and the memory 150 so as to move data between the plurality of display windows displayed on the device 100.

The memory 150 stores various information for moving the data between the plurality of display windows displayed on the device 100. For example, the memory 150 may store the user input received by the user input receiving unit 110, the image or text data captured by the capturing unit 120, and the data inserted and displayed by the display unit 130. In addition, the memory 150 may store information that is transmitted or received between the user input receiving unit 110, the capturing unit 120, the display unit 130, and the controlling unit 140.

A method of moving data between a plurality of display windows by using the structure of the device 100 will be described with reference to FIG. 3.

FIG. 3 is a flowchart illustrating a method of generating a captured image according to an exemplary embodiment of the present invention.

Referring to FIG. 3, the method of generating a captured image illustrated in FIG. 3 includes operations to be performed by the user input receiving unit 110, the capturing unit 120, the display unit 130, the controlling unit 140, and the memory 150 illustrated in FIG. 2 in a time order. Thus, although omitted below, the description of elements illustrated in FIG. 2 may apply to the flowchart illustrated in FIG. 3.

In step 310, the device 100 determines a first display window to be captured. The first display window may be one among a plurality of display windows displayed on the screen of the device 100. In an exemplary embodiment of the present invention, the first display window may be one display window that is selected by a user from the plurality of windows and is currently activated by the user, and in another exemplary embodiment of the present invention, the first display window may be a plurality of display windows.

For example, when a plurality of display windows are displayed, the user device 100 may determine one display window on which a moving picture image is reproduced as the first display window. In this case, the device 100 may determine a display window as corresponding to the first display window in response to an external input signal associated with the touching of an arbitrary region of one display window (e.g., an activated display window) on which a moving picture image is reproduced. Alternatively, the device 100 may determine a display window excluding the activated display window or all of a plurality of display windows displayed on the screen as corresponding to the first display window.

In step 320, the device 100 captures data displayed on the first display window. The device 100 may capture the data displayed on the first display window in response to an input associated with the touching of a region corresponding to a capturing button displayed on the screen (e.g., a button having a function of capturing the display window). A user input for capturing data may be an input associated with the touching of the capturing button region or a long touch input associated with the touching of the capturing button region for a predetermined amount of time.

In operation 320, the device 100 may capture data corresponding to a region excluding a region corresponding to a status bar disposed on a top or bottom end of the first display window. For example, the device 100 may capture only a region corresponding to an application that is executed on the display window. Alternatively, the device 100 may capture all regions of the display window.

In step 330, the device 100 displays a captured image on the screen. The captured image may be a captured image of data displayed on the first display window in operation 320 or a still image.

In step 330, the captured image may be displayed on the screen at the same size as the first display window. For example, the captured image that is obtained by capturing the data displayed on the first display window may have the same size as the first display window.

In the above-described exemplary embodiment of the present invention, when the region excluding the status bar disposed on the top end and/or bottom end of the first display window is captured, the captured image may have a smaller size than the first display window. In this way, the captured image may be displayed with a smaller size than the first display window.

In addition, regarding a position in which the captured image is displayed, the device 100 may overlap the captured image with the first display window and may display the overlapping captured image. For example, the device 100 may overwrite the captured image having the same size as the first display window into the first display window. When a moving picture image is reproduced on the first display window, the captured image may be a still image that is generated at a time when the moving picture image is captured, and the still image may overlap with the moving picture image (e.g., such that it can be separated from the moving picture image that is continuously reproduced on the first display window).

In another exemplary embodiment of the present invention, in step 330, the captured image may not fully overlap with the first display window. Rather, the captured image may be displayed on a predetermined area of the first display window not to shield an application that is executed on the first display window such as, for example, a moving picture image-reproducing application. For example, when a captured image having a smaller size than the first display window is generated from the moving picture image reproduced on the first display window, the captured image may be displayed on the bottom or top end of the first display window so as not to shield the moving picture image reproduced on the first display window. Thus, the user may check the captured image separately from the moving picture image that is executed on the first display window.

In another exemplary embodiment of the present invention, the device 100 may generate an additional display window and may display the captured image within the new display window. In this case, the new display window may be displayed on a predetermined area of the screen of the device 100.

In an exemplary embodiment of the present invention, when a plurality of first display windows are captured, the device 100 may overlap a plurality of captured images captured from each of the first display windows with each first display window in operation 330. In another exemplary embodiment of the present invention, for an entire screen mode first display window, such that the size of the captured image is the same as the size of the screen, the device 100 may display the captured image with a smaller size than the first display window on a partial region of the first display window.

In steps 310 through 330 of FIG. 3, the device 100 may manage the image captured on the display window conveniently. For example, the captured image may overlap the display window to be captured such that the user is not required to edit the captured image within an additional display window. In addition, the captured image may be displayed at the same position and with the same size as the first display window such that the captured object may be efficiently identified by a user interface.

FIG. 4 is a flowchart illustrating a method of moving a captured image generated by, for example, the method illustrated in FIG. 3, according to an exemplary embodiment of the present invention.

In step 341, the device 100 displays the captured image on the screen. For example, step 330 that has been described in connection with FIG. 3 may be performed. The device 100 may overlap the captured image with the first display window at the same size as the first display window.

In step 342, the device 100 selects a predetermined area of the captured image for moving to a second display window. For example, the device 100 may determine a predetermined area of the captured image for inserting the captured image in the second display window in response to an external input signal.

For example, the device 100 may determine a predetermined area to be cut according to an external input signal for drawing a closed curve. Alternatively, the device 100 may determine a predetermined area to be cut according to an external input signal for selecting a shape corresponding to predetermined size and shape. The predetermined size and shape may vary, and the shape may be, for example, a circular shape, an oval shape, a rectangular shape, or the like.

The device 100 may display the predetermined area such that it is visually discriminated from other regions of the captured image. For example, the device 100 may display the predetermined area to be discriminated from other regions of the captured image by varying at least one among colour, saturation, and brightness of the predetermined area. Of course, the device 100 may not apply any visual effects to the predetermined area but may display visual effects applied to regions other than the predetermined area. For example, the device 100 may display the predetermined area and may express regions other than the predetermined area such that the predetermined area to be inserted is highlighted.

In step 343, the device 100 corrects the region selected in step 342. For example, the device 100 may correct the size and/or position of the selected region according to a user input. The size of the selected region may be corrected by a multi touch input in which two touch points are brought together or moved apart to reduce or enlarge the size of the selected region, and the device 100 may determine the selected region newly according to a new input for drawing a closed curve. The selected region may be corrected by a user input for selecting a figure having one shape.

For example, if a predetermined area is determined by a user input for drawing a closed curve in step 342, the predetermined area may deviate from a user desired region. Thus, the user may vary the position of the predetermined area while maintaining the shape thereof so as to determine a partial area of the captured image to be inserted in the second display window. In this case, the user input for varying the position of the predetermined area may be an input for touching the predetermined area and for dragging the touch input within a predetermined time from the touch point of time.

In step 344, the device 100 moves the predetermined area determined in steps 342 and 343 to the second display window so as to insert the determined predetermined area in the second display window. In detail, if the touch input on the predetermined area is maintained for a predetermined amount of time in step 344, the device 100 may determine the predetermined area as an image to be cut for inserting in the second display window and may move the predetermined area to the second display window. For example, as described above, if the device 100 displays the predetermined area on the screen and corrects the predetermined area by position movement and size adjustment, the user may touch the predetermined area for the predetermined amount of time so as to move the predetermined area to the second display window. The device 100 may determine the predetermined area as an image to be inserted, according to the user input.

In an exemplary embodiment of the present invention, the device 100 may overlap an image having a smaller size than the predetermined area with the predetermined area and may display the image if the user input for determining an image to be inserted is received from the device 100. For example, if the image to be cut is determined by a touch input for the predetermined amount of time, the device 100 may overlap the image to be cut, with a smaller size than the predetermined area and may display the image to be cut, so that the user may check the image to be cut easily. The device 100 may overlap the size of the image to be cut with a larger size than the predetermined area.

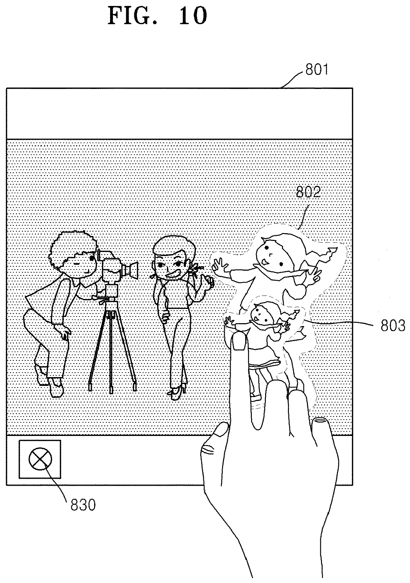

In addition, the device 100 may display the position of the image to be cut on the screen at a different position from the predetermined area. For example, in case of a predetermined area having a rectangular shape, the device 100 may display a position of a centre of the predetermined area and a position of a centre of the image to be cut offset from one another within a predetermined range. This will be described with reference to FIG. 10 in detail. Thus, the size and position of the image to be cut are different from the size and position of the predetermined area so that the user may easily visually check the image to be cut.

As described above, if the predetermined area is displayed on the screen, the device 100 may move the predetermined area to the second display window. The moved predetermined area may be an image to be cut by the user input. The device 100 may touch the predetermined area for a predetermined amount of time and may move the predetermined area to the second display window based on a user input associated with the drawing of the touch input toward the second display window.

As described above, the device 100 may move a part (predetermined area) or the whole of the captured image captured on the first display window.

In step 345, the device 100 inserts the predetermined area in the second display window. For example, if the predetermined area is moved to the second display window according to the user input and a drag input is completed (e.g., if the user takes his/her own finger away from the screen), the predetermined area may be inserted at a position of the second display window at which the drag input is completed.

The device 100 may insert the captured image in the second display window when an application corresponding to the second display window provides a function of inserting an image. For example, when the application corresponding to the second display window is an application in which a function of inserting an image is not provided, the captured image is not required to be inserted in the second display window so that the device 100 may check whether a function of inserting a captured image is supported and then may insert the captured image in the second display window.

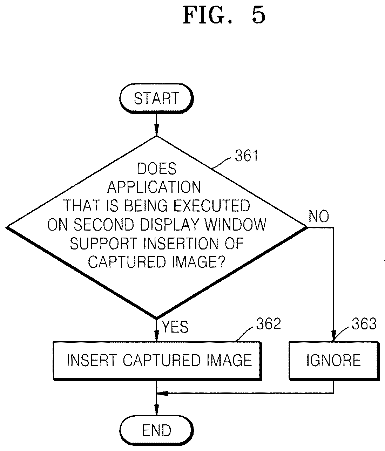

FIG. 5 is a flowchart illustrating a method of moving the captured image generated by, for example, the method illustrated in FIG. 3, according to another exemplary embodiment of the present invention.

Referring to FIG. 5, in step 345 described in FIG. 4, the device 100 inserts the predetermined area that is moved to the second display window, in the second display window and displays the predetermined area.

Subsequently, in step 361, the device 100 determines whether an application that is being executed on the second display window supports insertion of the captured image. If the application supports insertion of the captured image, the method proceeds to step 362. In contrast, if the application that is being executed on the second display window is determined to not support insertion of the captured image, the method proceeds to step 363.

In step 362, when the application corresponding to the second display window supports insertion of the captured image, such as a memo pad application, the device 100 inserts the predetermined area that is moved in step 350, in the second display window.

In step 363, when the application corresponding to the second display window does not support insertion of the captured image, although the predetermined area is moved to the second display window, the device 100 does not insert the predetermined area of the captured image and ignores it.

Thus, the device 100 may determine whether the captured image is inserted depending on the type of an application corresponding to a display window in which the captured image is to be inserted, and thus, may prevent the captured image from being unnecessarily inserted in the display window.

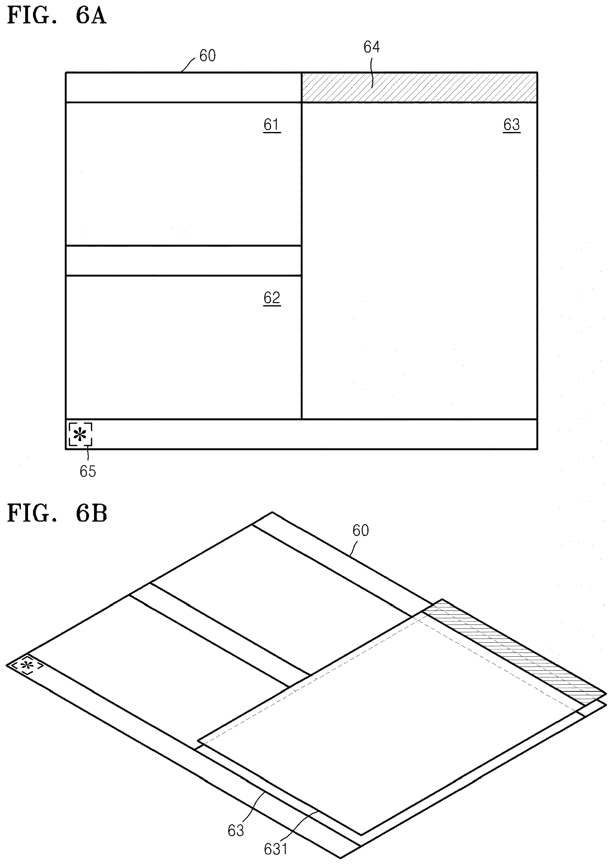

FIGs. 6A and 6B illustrate an operation of overlapping and displaying a captured image, according to an exemplary embodiment of the present invention.

Referring to FIG. 6A, three display windows 61, 62, and 63 are displayed on a screen 60 of FIG. 6A, and the device 100 displays a capturing button 65 that is disposed on a bar displayed on a bottom end of the screen 60 so as to capture data.

In addition, each of the display windows 61, 62, and 63 includes a status bar for moving the display window or for performing a predetermined operation, such as maximizing, minimizing, and closing the display window. In FIG. 6A, an identification number 64 for the status bar is shown only for a first display window 63. The status bar 64 is displayed as being shaded (e.g., or so as to appear to be in a dark colour) so as to convey that the first display window 63 displayed on the right side of the screen 60 is a currently-activated display window. However, a method of displaying the activated window is not limited thereto, and the activated window may be displayed using various methods, such as, for example, displaying the activated window on the bottom end of the display window.

Referring to FIG. 6B, an operation of capturing and displaying the first display window 63 according to a user input associated with the touching of the capturing button 65 or a long touch input is illustrated. For example, if the activated first display window 63 is captured by the user input, a captured image 631 of the first display window 63 is displayed overlapping the first display window 63. In an exemplary embodiment of the present invention, the captured image 631 may be displayed at the same size as the first display window 63 and at the same position as the first display window 63.

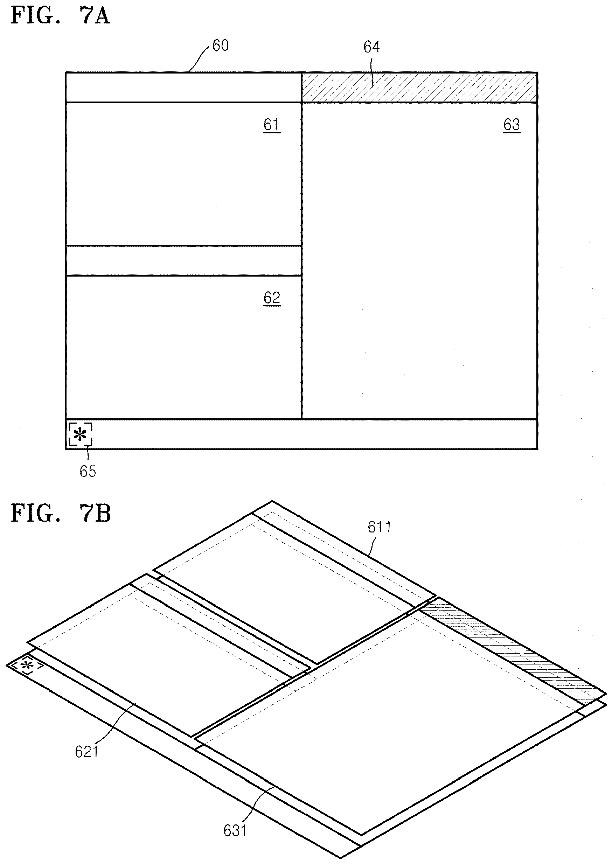

FIGs. 7A and 7B illustrate an operation of overlapping and displaying a captured image according to another exemplary embodiment of the present invention.

Referring to FIGs. 7A and 7B, as illustrated in FIG. 6, three display windows 61, 62, and 63 are displayed on a screen 60 of FIG. 7A, and the device 100 displays a capturing button 65 that is disposed on a bottom end of the screen 60 so as to capture data. Reference numeral 64 corresponds to a status bar. Status bar 64 is displayed as being shaded so as to convey that the first display window 63 displayed on the right side of the screen 60 is a currently-activated display window.

If an input associated with the touching of the capturing button 65 (or associated with a long touch input or another predetermined input) is received from the device, the device 100 may display a screen illustrated in FIG. 7B. However, as an example, in contrast to the operation illustrated in FIGs. 6A and 6B, the device 100 may capture all of the plurality of display windows 61, 62, and 63 displayed on the screen 60 as well as the activated first display window 63.

Each of captured images 611, 621, and 631 overlaps with each of the first display windows 61, 62, and 63 to be captured. For example, the captured image 631 on the first display window 63 may overlap with the first display window 63, and the captured image 611 on the second first display window 61 may overlap with the second first display window 61.

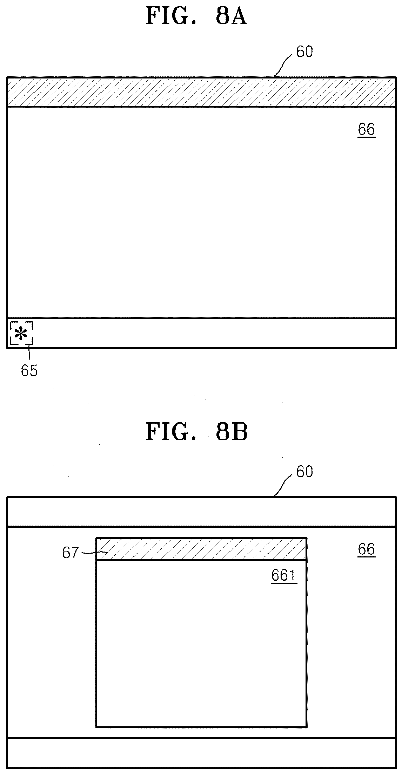

FIGs. 8A and 8B illustrate an operation of overlapping and displaying a captured image, according to yet another exemplary embodiment of the present invention.

Referring to FIG. 8A, an entire screen mode display window 66 having the same size as a screen 60 is displayed on the screen 60.

If the user touches a capturing button 65 so as to capture data, the device 100 overlaps a captured image with the first display window 66 and displays the captured image on the first display window 66. In this case, the device 100 may display the captured image smaller than the size of the first display window 66, in contrast to the respective operations illustrated in FIGs. 6A and 6B, and FIGs. 7A and 7B.

Referring to FIG. 8B, a captured image 661 may be displayed in a partial area of the first display window 66 with a smaller size than the first display window 66. In an exemplary embodiment of the present invention, a status bar 67 indicating that the captured image 661 overlaps with an additional display window and is displayed on the additional display window may be displayed together with the captured image 661.

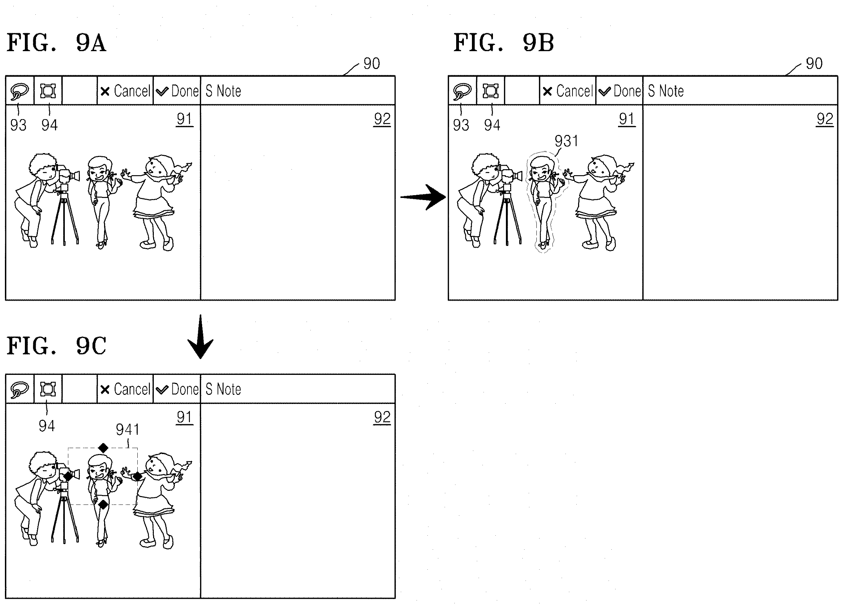

FIGs. 9A through 9C illustrate an operation of determining an area to be captured according to an exemplary embodiment of the present invention.

Referring to FIGs. 9A through 9C, a captured image 91 is displayed on the left side of a screen 90, and a second display window 92 in which the captured image 91 is to be inserted, is displayed on the right side of the screen 90. A memo application for inserting the captured image in the second display window 92 may be executed on the second display window 92.

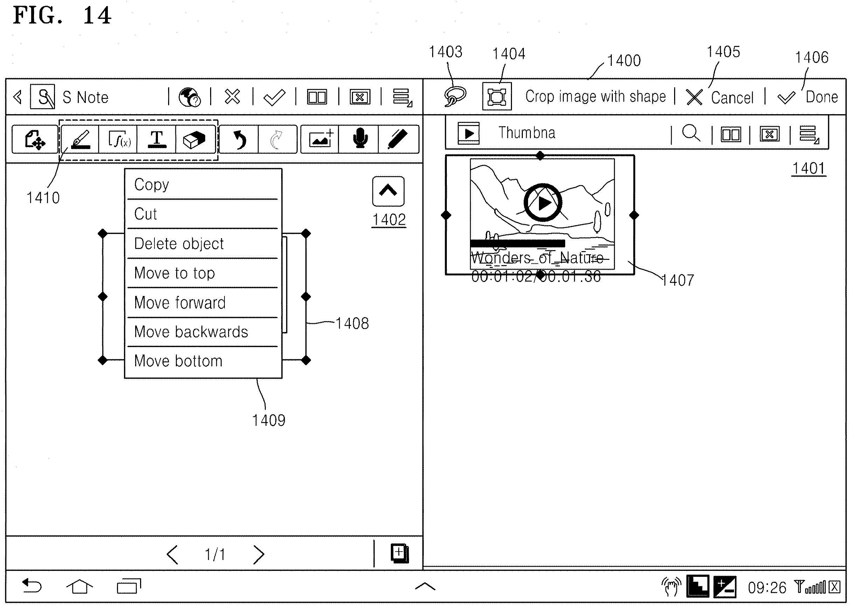

As illustrated in FIG. 9A, a status bar is displayed on the top end of the captured image 91, and the device 100 displays buttons corresponding to several functions for determining an area to be inserted, on the status bar. A closed curve button 93 for selecting the area to be inserted as a closed curve, and a figure button 94 for selecting the area to be inserted based on a predetermined figure are shown in FIG. 9A. Various buttons other than the above buttons may be further displayed on the status bar, which will be described with reference to FIG. 14 in detail.

FIG. 9B illustrates an operation of determining an area 931 to be cut by using the closed curve button 93 is illustrated. For example, the device 100 may allow the user to touch the closed curve button 93 and to receive a drag input on the captured image 91. Subsequently, the device 100 determines the area 931 to be cut based on the received drag input.

As illustrated in FIG. 9C, if the user determines an area 941 to be cut by using the figure button 94, the area 941 to be cut having a rectangular shape and a predetermined size is displayed on the captured image 91. The device 100 may also display a button for receiving an input for adjusting the size of the area 941 to be cut. In FIG. 9C, the device 100 displays small rectangles on upper, lower, right, and left edges of the area 941 to be cut having a rectangular shape, thereby indicating that the size of the area 941 to be cut may be adjusted.

Meanwhile, unlike as described with reference to FIGS. 9B and 9C, the device 100 may end the displaying of the capture image 91 in FIG. 9A if the user does not take any action for a predetermined period of time or touches a back key or a cancel key of the device 100. In other words, the device 100 may end the displaying of the capture image 91 and continuously display an image before the capture image 91 if the user does not cut or move the capture image 91. Also, the device 100 may end the displaying of the capture image 91 while ending the displaying of the second display window 92.

FIG. 10 illustrates an operation of moving a captured image according to an exemplary embodiment of the present invention.

Referring to FIG. 10, the device 100 captures data displayed on a first display window according to a user input associated with a touching of a capturing button 830 displayed on a screen 801. Subsequently, the device 100 determines an area 802 to be inserted in a second display window based on a drag input for drawing a closed curve on the captured image. As described above, the device 100 may display the other regions than the area 802 to be inserted as shaded (e.g., or so as to appear to be a dark colour) so that the area 802 to be inserted may be clearly discriminated from the other regions. As an example, the device 100 may display the other regions in black so that the area 802 to be inserted may be completely discriminated from the other regions.

If the device 100 receives an input associated with a touching of the area 802 to be inserted for a predetermined amount of time, the device 100 may display an area 803 to be cut so as to move the area 803 to be cut to the second display window and to insert the area 803 to be cut in the second display window. As described above with reference to FIG. 3, the device 100 may display the area 803 to be cut with a smaller size than the area 802 to be inserted. Thus, the user may identify the area 803 to be cut easily.

In addition, the device 100 may not accurately overlap the area 803 to be cut with the area 802 to be inserted as illustrated in FIG. 10, such that the device 100 positions the centres of the area 803 to be cut and the area 802 to be inserted different from each other. In other words, the device 100 may vary the position of the area 803 to be cut so that the user may find the area 803 to be cut easily.

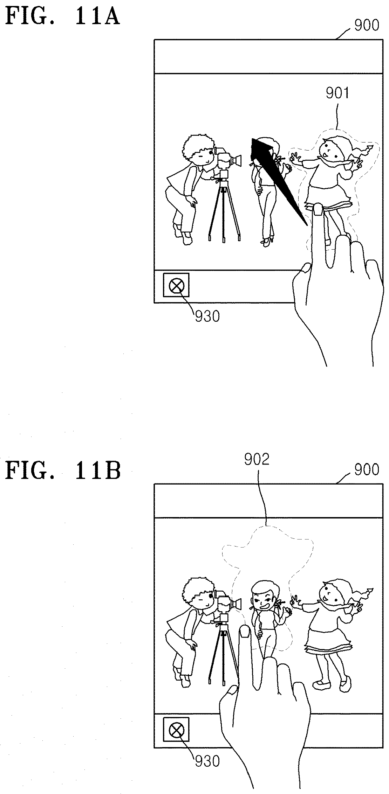

FIGs. 11A and 11B illustrate an operation of correcting an area to be inserted of a capture image according to an exemplary embodiment of the present invention.

Referring to FIG. 11A, the user determines an area 901 to be inserted by using a touch input for drawing a closed curve on the captured image displayed on a screen 900. Subsequently, the device 100 receives from the user an input associated with a touching and a moving of the area 901 to be inserted within a predetermined amount of time so as to correct the position of the area 901 to be inserted. For example, the user may determine an area 901 to be inserted when the device 100 captures a user input associated with a touching of a capturing button 930 displayed on a screen 900.

Referring to FIG. 11B, the device 100 displays an area 902 to be inserted and having a position that may vary. For example, the device 100 varies the position of the area 902 to be inserted according to the user input illustrated in FIG. 11A and displays the varying position of the area 902 to be inserted. Thus, the user may specify the position of the area 902 to be inserted from the captured image accurately. For example, the user may vary the position of the area 902 to be inserted when the device 100 captures a user input associated with a touching of a capturing button 930 displayed on a screen 900.

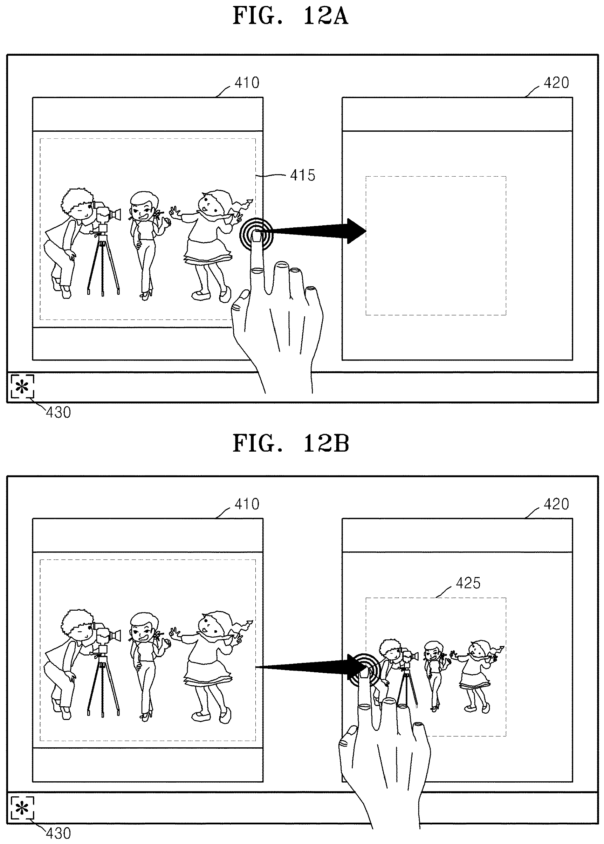

FIGs. 12A and 12B illustrate an operation of moving a captured image 410 to a second display window 420 according to an exemplary embodiment of the present invention.

Referring to FIG. 12A, the captured image 410 and the second display window 420 overlap with a first display window and are displayed on the first display window. The captured image 410 and the second display window 420 may display a status bar including buttons for performing several functions and for controlling several operations on a top end of the first display window.

The captured image 410 displayed on the left side of a screen may overlap with the first display window and may be displayed on the first display window as the user input receiving unit 110 receives an input associated with the selecting of the capturing button 430 from the user and the capturing unit 120 captures data on the first display window.

Subsequently, the user input receiving unit 110 may receive an input for selecting a partial area 415 of the captured image 410 and for moving the partial area 415 of the captured image 410 to an area in which the second display window 420 is displayed.

Referring to FIG. 12B, an operation of inserting the partial area 415 in the second display window 420 and displaying the partial area 415 on the second display window 420 by using the display unit 130 is performed based on the received user input. In an exemplary embodiment of the present invention, the display unit 130 in FIG. 12B may insert the partial area 415 of the captured image 410 that is smaller than the captured image 410 in consideration of a display environment of the second display window 420.

The captured image 410 displayed on the left side of a screen may overlap with the first display window and may be displayed on the first display window as the user input receiving unit 110 receives an input associated with the selecting of the capturing button 430 from the user and the capturing unit 120 captures data on the first display window.

In another exemplary embodiment of the present invention, the display unit 130 may insert and display the partial area 415 of the captured image 410 in a position in which a drop operation is completed as an area 425, based on a drag and drop input received by the user input receiving unit 110.

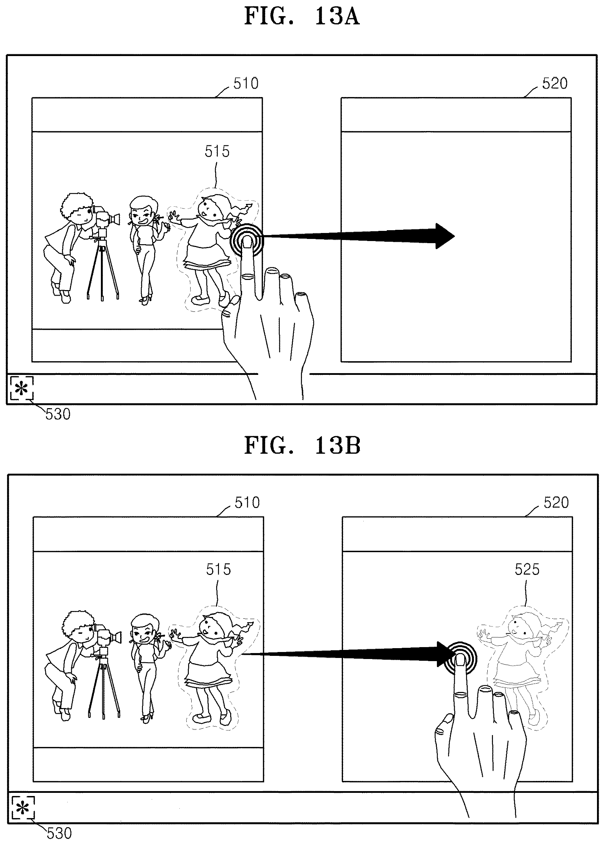

Although FIGs. 12A and 12B illustrate an exemplary embodiment of the present invention in which all of the captured image 410 is inserted in the second display window 420, an exemplary embodiment of the present invention in which a part of a captured image is inserted will be described with reference to FIGs. 13A and 13B.

FIGs. 13A and 13B illustrate an operation of moving a captured image 510 to a second display window 520 according to another exemplary embodiment of the present invention.

In an exemplary embodiment of the present invention, an operation of moving a partial area 515 of the captured image 510, which overlaps with and is displayed on a first display window, to the second display window 520 is shown.

Referring to FIG. 13A, the user input receiving unit 110 may receive a user input associated with a drawing of a closed curve among the captured image 510 that is captured by the capturing unit 120. Subsequently, the capturing unit 120 may receive the partial area 515 from the captured image 510 based on the received user input. As descried above, the user input associated with selecting the partial area 515 may be a drag input associated with a drawing of a closed curve along edges of the partial area 515. Subsequently, the user input receiving unit 110 may receive an input associated with a moving of the selected partial area 515 to the second display window 520.

The captured image 510 displayed on the left side of a screen may overlap with the first display window and may be displayed on the first display window as the user input receiving unit 110 receives an input associated with the selecting of the capturing button 530 from the user and the capturing unit 120 captures data on the first display window.

Referring to FIG. 13B, the display unit 130 inserts an image representing the selected partial area 515 of the captured image 510 in the second display window 520 based on a user input associated with a moving of the partial area 515 and displays the image as partial area 525 on the second display window 520. Thus, the partial area 515 of the captured image 510 may be displayed on the second display window 520.

The captured image 510 displayed on the left side of a screen may overlap with the first display window and may be displayed on the first display window as the user input receiving unit 110 receives an input associated with the selecting of the capturing button 530 from the user and the capturing unit 120 captures data on the first display window.

When a content reproduced on the first display window is a moving picture image, the capturing unit 120 may capture person information regarding a partial area of the moving picture image. For example, the capturing unit 120 may capture text information (a person's name or identity) regarding a person who appears in the selected partial area 515. In addition, when a person who appears in the selected partial area 515 is an entertainer, the capturing unit 120 may capture Uniform Resource Identifier (URI) data regarding an address of a homepage of the entertainer.

Subsequently, the display unit 130 may display information regarding the captured moving picture image on the second display window 520 based on the received user input. For example, the display unit 130 may input an identity of the person who appears in the selected partial area 515 to the second display window 520 in the form of a text. In addition, the display unit 130 may display the homepage address of the entertainer who appears in the selected partial area 515 by linking the homepage address of the entertainer directly to the second display window 520. In addition, when the Internet address of the moving picture image is captured as the URI data, the display unit 130 may insert the URI data and intent data in the second display window 520 so that the moving picture image may be executed on the second display window 520.

FIG. 14 illustrates an editing tool for correcting the inserted captured image according to an exemplary embodiment of the present invention.

Referring to FIG. 14, a captured image 1401 that is captured on a first display window is displayed on the right side of a screen 1400. As described above with reference to FIG. 6, because the captured image 1401 overlaps with the first display window and is displayed on the first display window, although not clearly shown in FIG. 14, the device 100 may continuously display the first display window on a bottom end of the captured image 1401. In addition, a second display window 1402, in which the captured image 1401 is to be inserted, is displayed on the left side of the screen 1400 of FIG. 14.

Several functions for selecting an area 1407 to be cut so as to insert the captured image 1401 in the second display window 1402 are displayed on a top end of the captured image 1401. The device 100 may display a cancel button 1405 for cancelling the captured image 1401 and for displaying the first display window on the screen 1400 and a complete button (e.g., a 'done' button) 1406 for storing the whole of the captured image 1401 as well as the closed curve button 1403 and the figure button 1404 as described above with reference to FIG. 9.

As described above with reference to FIGs. 10 and 12, the device 100 may determine an area 1407 to be cut by using an user input associated with a touching of the figure button 1404, and if a drag and drop input is received from the user, the device 100 may insert the area 1407 to be cut in the second display window 1402. As illustrated in FIG. 14, an inserted image 1408 is displayed on the second display window 1402.

A memo application for supporting a function of inserting an image is displayed on the second display window 1402 of FIG. 14. If the area 1407 to be cut from the captured image 1401 is inserted, the device 100 may display an editing tool 1409 for correcting the inserted image 1408 in a predetermined position of the second display window 1402.

The editing tool 1409 may provide several functions for copying, cutting, deleting an object, and moving the inserted image 1408, and the user may correct or edit the inserted image 1408 by using the editing tool 1409.

In addition, as illustrated in FIG. 14, an instrument tool 1410 for providing various functions separately from the inserted image 1408 is displayed on the second display window 1402. For example, the device 100 may edit or make up the inserted image 1408 by using equation search, letter input, and eraser functions displayed on the instrument tool 1410.

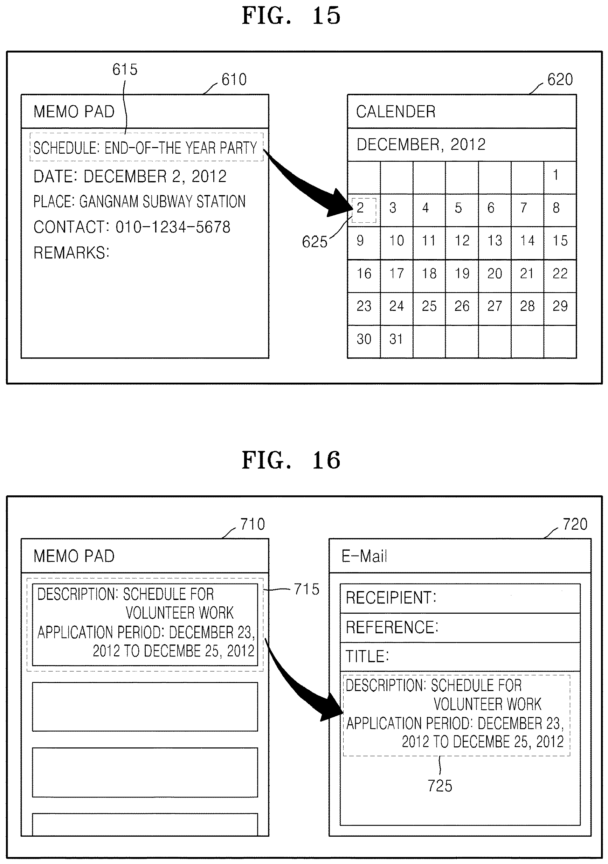

FIG. 15 illustrates an operation of moving a text displayed on a first display window to a second display window according to another exemplary embodiment of the present invention.

Referring to FIG. 15, a memo pad application is executed on the first display window 610, and a calendar application is executed on the second display window 620. The user may want to share a memo recorded regarding an end-of-the year party with the calendar application.

First, the user input receiving unit 110 may receive a user input associated with a capturing of a title 615 for a schedule of the end-of-the year party from the user. Thus, the capturing unit 120 may capture the title 615 for the schedule of the end-of-the year party. Because data is moved to the calendar application that is being executed on the second display window 620, the capturing unit 120 may capture the title 615 for the schedule of the end-of-the year party as a text.

The user input receiving unit 110 may receive the user input associated with a moving of the title 615 for the schedule of the end-of-the year party to the second display window 620 from the user. Subsequently, the display unit 130 may insert the captured title 615 for the schedule of the end-of-the year party in the second display window 620 based on the received user input.

In an exemplary embodiment, when a drag and drop operation that is executed in response to the received user input is completed in a field 625 indicating December 2 of the second display window 620, the display unit 130 may insert the title 615 for the schedule of the end-of-the year party in the field 625 indicating December 2 of the second display window 620 and may display the title 615 on the second display window 620.

In another exemplary embodiment of the present invention, when the title 615 for the schedule of the end-of-the year party is captured and is moved, the controlling unit 140 may insert details of the schedule of the end-of-the year party in the second display window 620 automatically. Thus, the user may identify details of the schedule of the end-of-the year party by using an input associated with a selecting of the field 625 indicating December 2 of the second display window 620.

In addition, when there is link information corresponding to the title 615 for the schedule of the end-of-the year party, the controlling unit 140 may match link information with the title 615 inserted in the second display window 620.

FIG. 16 illustrates an operation of moving a text displayed on a first display window to a second display window according to another exemplary embodiment of the present invention.

Referring to FIG. 16, a memo pad application is executed on the first display window 710, and an e-mail application is executed on the second display window 720.

In an exemplary embodiment of the present invention, the user wants to send a memo 715 regarding a schedule for volunteer work among a plurality of memos displayed on the memo pad application via e-mail. The user input receiving unit 110 may receive a user input associated with a selecting of the memo 715 regarding the schedule for volunteer work from the user. As described above, the user input receiving unit 110 may receive user inputs having several shapes such as, for example, an input associated with a dragging of a partial area of the text along edges of a rectangular area, an input associated with a determining of a rectangular area by selecting two or more vertices.

The capturing unit 120 may capture the memo 715 regarding the schedule for volunteer work. In relation to the present exemplary embodiment of the present invention, because the user wants to send the captured data via e-mail, the capturing unit 120 may capture the memo 715 regarding the schedule for volunteer work as an image or a text.

Subsequently, if the user input receiving unit 110 receives an input associated with a moving of the captured data to the second display window 720, the display unit 130 may insert the captured data in the second display window 720 and may display the captured data on the second display window 720. In this procedure, when a drop operation corresponding to the user input is completed in a description field 725 of the second display window 720, the display unit 130 may insert the memo 715 regarding the schedule for volunteer work in the description field 725 and may display the memo 715 on the second display window 720.

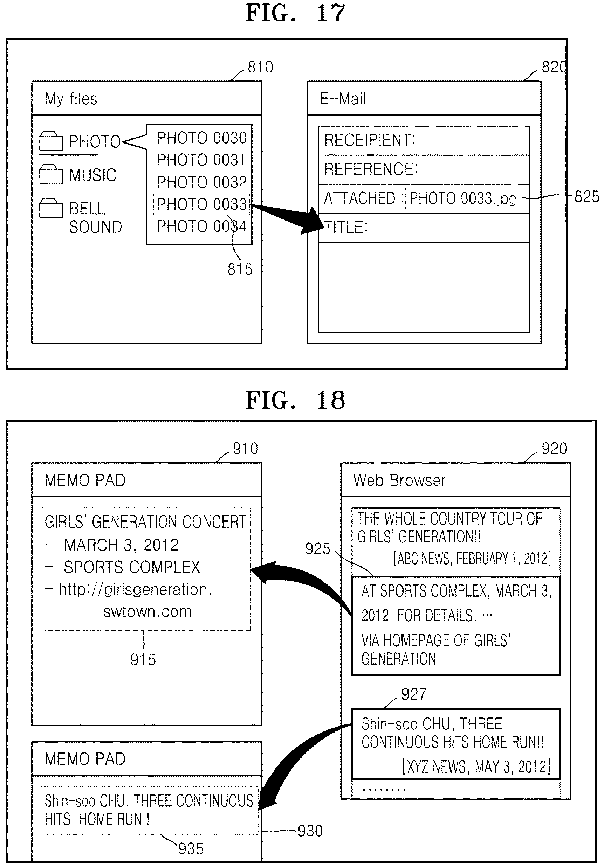

FIG. 17 illustrates an operation of moving a file displayed on a first display window to a second display window according to another exemplary embodiment of the present invention.

Referring to FIG. 17, a folder search application is executed on the first display window 810, and an e-mail application is executed on the second display window 820. The user wants to send a file 815 named photo0033 (e.g., a jpeg file, or the like) via an e-mail by attachment by using the device 100.

The user input receiving unit 110 may receive an input for selecting the photo0033 file 815 from the user. The user input receiving unit 110 may receive an input for multiply performing a holding operation for pressing an area of a screen corresponding to the photo0033 file 815 for a predetermined amount of time and a drag and drop operation.

The capturing unit 120 may capture the photo0033 file 815 based on the user input. In relation to the present exemplary embodiment of the present invention, the user wants to attach the photo0033 file 815 itself to the e-mail and does not want to capture an image or a plain text of the screen corresponding to the photo 0033 file 815. Thus, the capturing unit 120 may capture URI data corresponding to the photo0033 file 815. In an exemplary embodiment of the present invention, the capturing unit 120 may capture the URI data based on a holding input that is received by the user input receiving unit 110. In addition, when the user input receiving unit 110 receives an input to perform a drag and drop operation, the capturing unit 120 may capture intent data for attaching the photo0033 file 815 as the drop operation is completed.

The display unit 130 may insert the captured URI data and intent data in the second display window 820 based on the received user input and may display the captured URI data and intent data on the second display window 820. For example, as the drop operation is completed in an attachment field of the second display window 820, the display unit 130 inserts the URI data and the intent data regarding the photo 0033 file 815 in the second display window 820. Subsequently, the display window 130 may display the URI data and the intent data on the second display window so that photo0033 file 825 may be attached to the e-mail.

FIG. 18 illustrates an operation of moving data displayed on a first display window to a second display window according to another exemplary embodiment of the present invention.

Referring to FIG. 18, a web browser application is executed on the first display window 920, and a memo pad application is executed on second display windows 910 and 930. According to the illustrated exemplary embodiment of the present invention, the user wants to record a part of a description of news displayed on the web browser application in a memo pad.

First, an operation to be performed between the first display window 920 and the first second display window 910 will be described below. The user input receiving unit 110 may receive an input associated with a capturing of a description 925 of news displayed on the first display window 920. Thus, the capturing unit 120 may capture the description 925 of the news as one of an image and a text. An example in which the description 925 of the news is captured as a text is illustrated in FIG. 18

The capturing unit 120 may capture URI data and intent data regarding time, place, and/or information regarding a web site among the description 925 of the news. Subsequently, as the user input receiving unit 110 receives an input associated with a moving of the captured data, the display unit 130 may insert the captured data in the second display window 910 and may display the captured data on the second display window 910 as inserted captured data 915.

Next, an operation to be performed between the first display window 920 and the second display window 930 will be described below. The user input receiving unit 110 may receive an input associated with a capturing of a title 927 of news displayed on the first display window 920. Thus, the capturing unit 120 may capture the title 927 of the news as one of an image and a text. An example in which the title 927 of the news is captured as a text is illustrated in FIG. 18.

The capturing unit 120 may capture character data, URI data, and intent data regarding the title 927 of the news. Subsequently, as the user input receiving unit 110 receives an input associated with a moving of the captured data, the display unit 130 may insert the captured data in the second d display window 930 and also display the captured data on the second display window 930.

Thus, if the user input receiving unit 110 receives an input associated with a selecting of a title 935 of news displayed on the second display window 930 from the user, the device 100 may provide a description of the news to the user via the inserted URI data and intent data.

It will be appreciated that embodiments of the present invention can be realized in the form of hardware, software or a combination of hardware and software. The method therefore be performed by a program that can be executed in a computer and can be embodied by a general digital computer for operating the program using a computer-readable recording medium. In addition, a structure of data used in the above-described method can be recorded on the computer-readable recording medium by using several means. Program storing devices that can be used to describe storing devices including computer codes for executing various operations of the method according to the one or more exemplary embodiments of the present invention, should not be interpreted as including temporary objects, such as carrier waves or signals. Examples of the computer-readable recording medium include Read-Only Memory (ROM), Random-Access Memory (RAM), CD-ROMs, magnetic tapes, floppy disks, optical data storage devices, etc.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

As a non-exhaustive illustration only, a device described herein may refer to mobile devices such as a cellular phone, a Personal Digital Assistant (PDA), a digital camera, a portable game console, and an MP3 player, a Portable/Personal Multimedia Player (PMP), a handheld e-book, a portable lap-top Personal Computer (PC), a tablet PC, a Global Positioning System (GPS) navigation, and the like capable of wireless communication or network communication consistent with that disclosed herein.

As described above, according to the exemplary embodiment of the present invention, data, such as an image or a text, may be moved between a plurality of applications in a multi-window framework. A user may expect intuitive interaction between the plurality of applications by using the moving data.

While the invention has been shown and described with reference to certain exemplary embodiments thereof, it will be understood by those skilled in the art that various changes in form and details may be made therein without departing from the scope of the invention as defined by the appended claims.

### Annex

It will also be appreciated that certain aspects and embodiments of the invention provide subject matter in accordance with the following numbered paragraphs:
Paragraph 1. A method of generating a captured image from display windows displayed on a screen, the method comprising:
   determining at least one first display window to be captured from among one or more display windows displayed on the screen;
   capturing data displayed within the first display window based on a user input to generate a captured image;
   displaying the captured image such that it overlaps the first display window.
Paragraph 2. The method of Paragraph 1, wherein when there are a plurality of first display windows, displaying the captured image comprises displaying the captured image such that it overlaps each of the plurality of first display windows.
Paragraph 3. The method of Paragraph 1 or Paragraph 2, wherein when the first display window is an entire screen mode display window, displaying the captured image comprises displaying the captured image in a partial area of the first display window.
Paragraph 4. The method of any one of the preceding Paragraphs, further comprising inserting at least a part of the captured image in a second display window.
Paragraph 5. The method of Paragraph 4, wherein inserting at least a part of the captured image comprises inserting at least a part of the captured image in the second display window based on a user input corresponding to touching the captured image for a predetermined amount of time and dragging the touch point toward the second display window.
Paragraph 6. The method of Paragraph 4 or Paragraph 5, further comprising:
   determining a predetermined area of the displayed captured image; and
   selecting an image in the determined area of the captured image as a cut image;
   wherein inserting at least a part of the captured image in the second display window comprises inserting the cut image in the second display window.
Paragraph 7. The method of Paragraph 6, wherein determining a predetermined area comprises:
   displaying an area selected by a user on the displayed captured image; and
   correcting the displayed area.
Paragraph 8. The method of Paragraph 7, wherein correcting the displayed area comprises moving the displayed area to other regions of the captured image in response to a user touching the displayed area and dragging the touch point within a predetermined amount of time from the point in time at which the displayed area is touched.
Paragraph 9. The method of Paragraph 7 or Paragraph 8, wherein correcting the displayed area comprises varying a size of the displayed area in response to a user touching the displayed area at two touch points and moving the touch points apart or together.
Paragraph 10. The method of any one of Paragraphs 7 to 9, wherein the area selected by the user is selected based on a user touch input corresponding to drawing a closed curve on the captured image.
Paragraph 11. The method of any one of Paragraphs 6 to 10, wherein determining the predetermined area comprises determining the predetermined area in response to a user touching the predetermined area for a predetermined amount of time.
Paragraph 12. The method of any one of the preceding Paragraphs, wherein determining the first display window comprises determining an activated window from among the plurality of display windows as a first display window when a predetermined button on the screen is touched.
Paragraph 13. The method of any one of the preceding Paragraphs, wherein the captured image has the same size as the first display window and is displayed at the same relative position as the first display window.
Paragraph 14. The method of any one of the preceding Paragraphs, wherein displaying the captured image comprises displaying the captured image according to a size of the first display window.
Paragraph 15. The method of any one of the preceding Paragraphs, wherein capturing data comprises capturing all regions of the first display window.
Paragraph 16. A non-transitory computer-readable recording medium having recorded thereon a program for executing the method of any one of Paragraphs 1 to 13.
Paragraph 17. A device for generating a captured image from display windows displayed on a display unit, the device comprising:
   a display unit;
   a user input receiving unit arranged to receive a user input; and
   a capturing unit arranged to determine at least one first display window to be captured from among one or more display windows displayed on the display unit and to capture data displayed within the first display window based on a user input receiving by the user input receiving unit to generate a captured image;
   wherein the display unit is arranged to display a captured image such that it overlaps the first display window.

## Claims

1. A method of generating a captured data, the method comprising:
providing two application windows comprising a first display window and a second display window on a screen;
capturing data displayed on the first display window based on a first user input wherein the capturing of the data comprises capturing URI data corresponding to the captured data;
displaying the captured data on the first display window; and
inserting, into an application being executed on the second display window, data of which path is determined by the URI data based on a second user input.

2. The method of claim 1, wherein the first user input is a hold input and the second user input is a drag and drop input.

3. The method of claim 1, wherein the capturing of the data displayed on the first display window comprises
capturing the data displayed on an application being executed on the first display window, and
wherein the application being executed on the first display window is different from the application being executed on the second display window.

4. The method of claim 1, further comprising:
displaying the captured data and the URI data on the second display window.

5. The method of claim 4, wherein the displaying the URI data comprises displaying a URI link corresponding to the URI data on the second display window.

6. An apparatus for generating a captured data, the apparatus comprising:
a display unit for displaying two application windows comprising a first display window and a second display window on a screen; and
a capturing unit for capturing data displayed on the first display window based on a first user input wherein the capturing of the data comprises capturing URI data corresponding to the captured data;
wherein a display unit is configured to for displaying the captured data on the first display window and data of which path is determined by the URI data being inserted into an application being executed on the second display window based on a second user input.

7. The apparatus of claim 6, wherein the first user input is a hold input and the second user input is a drag and drop input.

8. The apparatus of claim 6, wherein the intent data is a computer readable file of which path is determined by the URI data.

9. The apparatus of claim 6, the capturing of the data displayed on the first display window comprises:
capturing the data displayed on an application being executed on the first display window, and
wherein the application being executed on the first display window is different from the application being executed on the second display window.

10. The apparatus of claim 6, wherein the display unit is configured to display the captured data and the URI data on the second display window.

11. The apparatus of claim 10, wherein the display unit is configured to display the URI data as a URI link corresponding to the URI data on the second display window.
